# FASCICULE DE BREVET EUROPEEN

(11) **EP 1 146 275 B1**
(45) Date de publication et mention de la délivrance du brevet: **02.06.2004**
(21) Numéro de dépôt: 01420079.4
(22) Date de dépôt: 04.04.2001
(51) Int. Cl.: F16L 37/084

(54) **Dispositif de raccordement démontable pour tuyau**
Lösbare Verbindungsvorrichtung für Rohre
Dismountable pipe connection device

(30) Priorité: 12.04.2000 FR 0004727
(43) Date de publication de la demande: 17.10.2001
(73) Titulaire: COMAP société anonyme, F-69008 Lyon (FR)
(72) Inventeur: Morant, Frédéric M., 05230 Avancon (FR); Tuffe, Stéphane M., 69740 Genas (FR)
(74) Mandataire: Maureau, Philippe

(56) Documents cités:
- EP-A- 0 330 871
- EP-A- 0 542 003
- US-A- 5 722 696

## Description

La présente invention concerne un dispositif de raccordement instantané démontable pour tuyau.

Le domaine d'application de la présente invention est le raccord de tuyaux destinés à conduire des fluides qui se trouvent sous une pression de quelques bars. Il peut s'agir par exemple de conduites d'eau à usage sanitaire ou chauffage.

On connaît des dispositifs de raccordement dans lesquels il suffit d'introduire l'extrémité d'un tuyau à raccorder et de le pousser axialement vers l'intérieur du dispositif pour réaliser un raccord présentant une bonne étanchéité et une bonne tenue mécanique. Ces dispositifs de raccordement sont appelés dispositifs de raccordement instantanés ou rapides.

Un premier type de tels raccordements comporte une pièce annulaire présentant à sa périphérie des dents qui s'étendent radialement vers l'intérieur mais qui sont toutes inclinées, par rapport au plan transversal dans lequel se trouve la pièce annulaire, vers l'intérieur du dispositif de raccordement. Le diamètre mesuré aux extrémités libres des dents est inférieur au diamètre extérieur du tuyau à raccorder. Toutefois, ces dents présentent une certaine élasticité qui, combinée à l'inclinaison des dents permet l'introduction du tuyau à raccorder dans le dispositif de raccordement. Une fois l'extrémité du tuyau introduite et engagée dans le dispositif de raccordement, un retrait de celui-ci est empêché par les dents qui viennent alors prendre appui sur la surface extérieure du tuyau et qui viennent s'arc-bouter. La pièce annulaire et ses dents réalisent donc la tenue mécanique de l'extrémité du tuyau dans le dispositif de raccordement. Un (ou plusieurs) joint(s) réalise(nt) l'étanchéité au niveau de ce raccord.

Les raccords de ce type connu comportent un corps dans lequel est généralement monté un joint. Un ensemble comportant une pièce annulaire avec des dents élastiques telles que décrites ci-dessus et appelée ci-après bague d'accrochage, est alors montée à une extrémité du corps. Cet ensemble comporte par exemple une butée pour permettre le positionnement axial de la bague d'accrochage, la bague d'accrochage, et un dispositif permettant de maintenir l'ensemble dans le corps.

Un autre type de raccordements instantanés comporte un ressort hélicoïdal disposé dans un logement conique, qui se rétrécit vers l'extérieur du raccord. Ce logement présente localement un diamètre inférieur au diamètre extérieur du ressort. Ce dernier présente un diamètre intérieur juste supérieur au diamètre extérieur d'un tube à raccorder. Lorsque l'extrémité du tube est poussée dans le raccord, le ressort est poussé vers le fond du logement conique, du côté où celui-ci présente le plus grand diamètre. Par contre, si l'extrémité du tube est tirée pour réaliser un désaccouplement, les spires du ressort sont entraînées vers la zone du logement conique de plus faible diamètre et viennent bloquer le tube par coincement.

Certains raccords sont destinés à un montage irréversible du tuyau. D'autres par contre prévoient un démontage. Pour démonter le tuyau, tous les dispositifs connus prévoient d'agir à l'aide d'un outil, directement ou indirectement, sur les dents de la bague d'accrochage pour incliner celles-ci suffisamment pour qu'elles ne soient plus en prise avec le tuyau raccordé, ou bien sur le ressort pour l'empêcher de suivre l'extrémité du tube lors de son retrait et éviter ainsi un coincement.

Le document WO-97/03314 révèle un dispositif de raccordement instantané comportant un outil de démontage extérieur. Cet outil de démontage peut être retiré axialement par rapport au tuyau raccordé afin de dégager le dispositif de serrage comprenant une bague d'accrochage du tube raccordé. L'outil de démontage est amovible et le dispositif de serrage possède une surface chanfreinée orientée vers l'extérieur avec laquelle une surface correspondante de l'outil de libération vient en contact. L'outil est un manchon en deux parties ou articulé, ce qui permet de le placer sur le tube et de le retirer de celui-ci.

Le document EP-0 330 871 décrit quant à lui un dispositif de raccordement instantané intégrant un bouton poussoir permettant la libération du tuyau raccordé. On retrouve dans ce dispositif un corps creux dans lequel est réalisé un alésage présentant plusieurs épaulements. Un joint d'étanchéité, puis une entretoise, puis une bague d'accrochage sont disposés dans ce corps. Un ensemble formé par un verrou d'encliquetage et un bouton poussoir vient maintenir la bague d'accrochage contre l'entretoise. Le bouton poussoir fait saillie axialement du raccordement et en agissant sur celui-ci on peut venir incliner directement les dents de la bague d'accrochage de manière à libérer le tuyau raccordé. La présente invention concerne un dispositif dans lequel l'outil de démontage est intégré au dispositif de raccordement. Dans les dispositifs de l'art antérieur, du type de ceux révélés par le document EP-0 330 871, la présence de l'outil de démontage implique un rallongement de la longueur totale du raccord. On obtient donc de ce fait un raccord relativement encombrant. En outre, on remarque que, en utilisant ce type de raccord, lorsque du fluide sous pression circule dans le tuyau raccordé, le tuyau gonfle légèrement et empêche l'accès au bouton poussoir. Celui-ci ne coulisse alors plus et un démontage est difficile voire impossible.

La présente invention a alors pour but de fournir un dispositif de raccordement démontable pour tuyau pour lequel un démontage même avec un tuyau déformé est possible. De préférence, ce raccord présentera un encombrement réduit par rapport aux raccords de l'art antérieur.

A cet effet, le dispositif qu'elle propose est un dispositif de raccordement instantané démontable pour tuyau comportant un corps dans lequel sont disposés un joint d'étanchéité, une entretoise et un dispositif d'accrochage, et comportant en outre un poussoir destiné à agir sur le dispositif d'accrochage afin de permettre une déconnexion d'un tuyau raccordé. Le dispositif d'accrochage peut être un dispositif d'accrochage quelconque fonctionnant par coincement et/ou par pénétration comme par exemple une bague d'accrochage ou bien un ressort logé dans un alésage conique, tels que décrits ci-dessus.

Selon l'invention, le poussoir se présente sous la forme d'une bague annulaire destinée à prendre place à l'intérieur du corps et présentant au moins une saillie radiale vers l'extérieur, les éléments placés à l'intérieur du corps sont maintenus en position par une douille fixée sur le corps, et l'ensemble formé par le corps et par la douille présente au moins une lumière correspondant à chaque fois à une saillie du poussoir.

Cet agencement des éléments constitutifs du dispositif de raccordement et la forme du poussoir, avec ses saillies radiales, permet de réaliser un raccord dans lequel le poussoir est accessible lorsque le tuyau connecté a gonflé sous l'effet de la pression du fluide circulant dans le tuyau.

Dans une première variante de réalisation, la douille est fixée de manière irréversible, par exemple par soudage, sur le corps. Une forme de réalisation soudée prévoit que les lumières destinées à laisser passer les saillies du poussoir sont réalisées sur la douille. Dans cette forme de réalisation, les saillies du poussoir s'étendent avantageusement également dans la direction axiale et les lumières destinées au passage des saillies sont réalisées dans une paroi de la douille sensiblement radiale. Cette paroi sensiblement radiale peut par exemple être une bride permettant la fixation avec le corps du dispositif de raccordement.

Dans une autre forme de réalisation soudée du dispositif de raccordement selon l'invention, on prévoit que le corps présente au niveau de chaque saillie du poussoir une encoche débouchant dans la face frontale du raccord du coté destiné à recevoir l'extrémité d'un tuyau, que la douille se présente sous la forme d'un anneau présentant des saillies radiales destinées à prendre place dans les encoches du corps et que les saillies du poussoir viennent prendre place avec jeu au fond des encoches et y sont maintenues par les saillies radiales de la douille. Ici, les saillies radiales du poussoir présentent avantageusement au moins une surface de guidage venant en appui sur la douille et/ou sur le corps pour permettre un parfait guidage du poussoir dans le dispositif de raccordement.

Dans une autre variante du dispositif de raccordement selon l'invention, la douille est encliquetée de manière réversible sur le corps.

Dans ce cas, une forme de réalisation prévoit que le corps présente des encoches axiales correspondant aux saillies radiales du poussoir, que le poussoir est placé dans le corps de telle sorte que ses saillies radiales viennent avec jeu au fond des encoches du corps, que la douille est destinée à être emmanchée dans le corps et présente sur sa surface périphérique des nervures axiales correspondant aux encoches du corps, et que des crochets élastiques sont prévus sur la douille pour coopérer avec des lumières réalisées dans le corps afin de permettre un encliquetage de la douille dans le corps.

De toute façon, l'invention sera bien comprise à l'aide de la description qui suit, en référence au dessin schématique annexé, représentant à titre d'exemples non limitatifs trois formes de réalisation d'un dispositif de raccordement selon l'invention.
Figure 1 est une vue en perspective éclatée d'une première forme de réalisation d'un raccord selon l'invention,
Figure 2 est une vue en coupe longitudinale du raccord de la figure 1 en position montée,
Figure 3 est une vue en perspective éclatée d'une seconde forme de réalisation d'un raccord selon l'invention,
Figure 4 est une vue en coupe longitudinale à échelle agrandie du raccord de la figure 3,
Figure 5 est une perspective en coupe d'une troisième forme de réalisation d'un raccord selon l'invention, et
Figure 6 est une vue en coupe selon la ligne de coupe VI-VI de la figure 5.

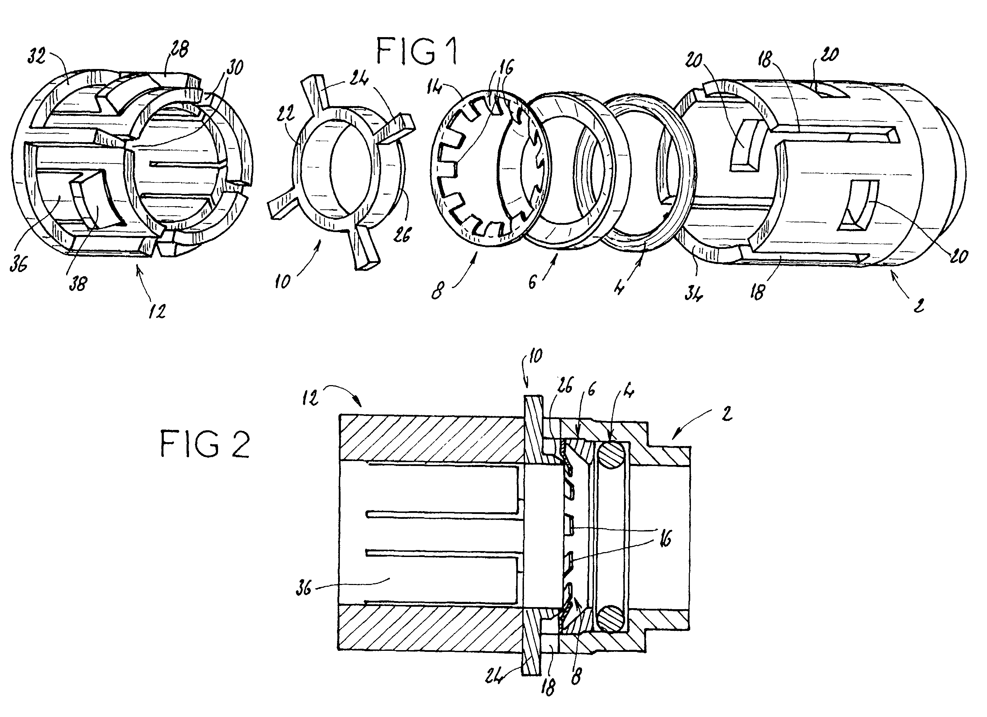

La figure 1 montre les six pièces constitutives d'un dispositif de raccordement selon une première forme de réalisation de l'invention. Ce dispositif comporte un corps 2, un joint torique 4, une entretoise 6, une bague d'accrochage 8, un poussoir 10 et une douille 12. Le joint torique 4, l'entretoise 6 et la bague d'accrochage 8 ne présentent pas de forme particulière et sont connus de ce fait de l'homme du métier. Il est donc inutile de les décrire en détail ici. Il est simplement rappelé que la bague d'accrochage comporte une couronne périphérique annulaire 14 et des dents 16 inclinées vers l'intérieur du raccord.

Le corps 2 présente un alésage intérieur étagé, comme on peut le voir sur la figure 2, et de manière connue, le joint torique vient en butée contre un premier épaulement et l'emplacement de l'entretoise 6 est défini à l'aide d'un second épaulement réalisé dans le corps 2. Le joint torique 4 prend place dans le fond du corps 2 entre le premier épaulement cité ci-dessus et l'entretoise 6. La bague d'accrochage 8 vient quant à elle en appui contre l'entretoise 6. Comme on peut le voir sur les figures 1 et 2, l'entretoise 6 présente du côté de la bague d'accrochage 8 une surface conique se rétrécissant vers l'intérieur du corps 2 afin de ne pas gêner l'inclinaison des dents de la bague d'accrochage 8.

Du côté destiné à recevoir l'extrémité d'un tuyau à raccorder, le corps 2 présente la forme d'une douille de diamètre intérieur sensiblement constant. A la périphérie de cette douille, sont réalisées quatre encoches 18 traversant toute l'épaisseur de la paroi de la douille et s'étendant axialement. Ces quatre encoches définissent quatre pattes s'étendant axialement. Dans chacune de ces pattes est réalisée une lumière 20 de forme rectangulaire.

Le poussoir 10 se compose d'une partie annulaire 22 et de quatre saillies radiales 24. La partie annulaire 22 se présente sous la forme d'une bague de section transversale rectangulaire présentant du côté destiné à venir face à la bague d'accrochage 8 un chanfrein sur sa face extérieure. Ce chanfrein 26 est de forme adaptée à l'inclinaison des dents 16 de la bague d'accrochage 8. Quant aux saillies 24, elles s'étendent radialement et présentent une section sensiblement carrée. Dans le raccord monté, ces saillies 24 prennent place dans des encoches 18 du corps 2. La section de ces saillies 24 et la largeur des encoches 18 sont donc adaptées l'une à l'autre. La hauteur des saillies 24 est telle que celles-ci dépassent du corps 2 en position montée du raccord et permettent à un opérateur de manuellement agir sur le poussoir en direction de la bague d'accrochage 8. Comme on peut le voir sur la figure 2, les encoches 18 sont assez profondes pour que, lorsque le poussoir 10 vient au contact de la bague d'accrochage 8 au niveau du chanfrein 26, le poussoir puisse encore se déplacer vers l'intérieur du raccord suffisamment pour faire fléchir les dents 16 et ainsi libérer un tuyau connecté.

La douille 12 est de forme adaptée au corps 2 de manière à pouvoir venir s'encliqueter dans celui-ci. Cette douille présente quatre nervures 28 s'étendant axialement et en saillie sur sa surface extérieure. La section de ces nervures 28 est adaptée à la forme des encoches 18 du corps 2. De même que ces dernières et que les saillies radiales 24 du poussoir 10, les rainures 28 sont équiréparties et sont donc décalées angulairement de 90° l'une par rapport à l'autre. La longueur des nervures 28 est d'une part inférieure à la longueur de la douille 12 et d'autre part inférieure à la longueur des encoches 18. Comme on peut le constater sur la figure 1, au niveau de chaque rainure 28, du côté de la douille 12 destiné à prendre place à l'intérieur du corps 2, un évidement 30 est prévu pour permettre le passage d'une saillie radiale 24. A l'autre extrémité de la douille 12, c'est-à-dire vers l'extérieur du raccord, la douille présente une nervure annulaire 32 destinée à venir en butée contre la face frontale 34 du corps 2. Ainsi, l'enfoncement de la douille 12 dans le corps 2 est limité.

La douille 12 présente à chaque fois entre deux nervures longitudinales 28 une patte élastique 36 portant un crochet 38 faisant saillie vers l'extérieur de la douille. La surface frontale du crochet se trouvant vers l'intérieur du raccord 2 est inclinée pour faciliter l'introduction de la douille dans le corps 2. A chaque crochet 38 correspond une lumière 20.

Pour le montage du raccord, on place à l'intérieur du corps 2 le joint torique 4, l'entretoise 6 et la bague d'accrochage 8. On fait ensuite coulisser le poussoir 10 jusqu'à ce qu'il vienne au contact de la bague d'accrochage 8. Les saillies 24 coulissant dans les encoches 18 guident le poussoir 10. La douille 12 est enfin encliquetée dans le corps 2 et vient maintenir l'ensemble des pièces dans celui-ci. Lors de son introduction dans le corps 2, la douille est placée de telle sorte que les nervures 28 se trouvent chacune dans une encoche 18. Les pattes élastiques 36 viennent fléchir vers l'intérieur de la douille 12 jusqu'à ce que les crochets 38 se trouvent face aux lumières 20 correspondantes. Les lumières 20 sont disposées de telle sorte que les crochets 38 viennent s'encliqueter lorsque la douille 12 vient en butée au niveau de la nervure annulaire 32. La douille est ainsi parfaitement maintenue dans le corps 2. Aucune translation ni rotation de celle-ci n'est possible. Pour raccorder un tuyau, il suffit, classiquement, d'introduire celui-ci dans le raccord du côté de la douille. Les dents 16 de la bague d'accrochage assurent alors son maintien dans le raccord tandis que le joint 4 réalise l'étanchéité du raccord. Grâce à la présence du tuyau dans le raccord, la douille est parfaitement fixée dans le corps 2 puisque les pattes élastiques 36 ne peuvent fléchir vers l'intérieur.

Pour retirer le tuyau connecté hors du raccord, il suffit de venir pousser à l'aide des saillies radiales 24 le poussoir 10 vers le fond des encoches 18 pour agir sur les dents 16 de la bague d'accrochage 8 et ainsi libérer le tuyau connecté.

La figure 2 montre bien que lorsque le tuyau raccordé est déformé, il est possible d'accéder au poussoir. La déconnexion est donc possible même lorsque le tuyau connecté a été gonflé par le fluide sous pression circulant à l'intérieur de celui-ci.

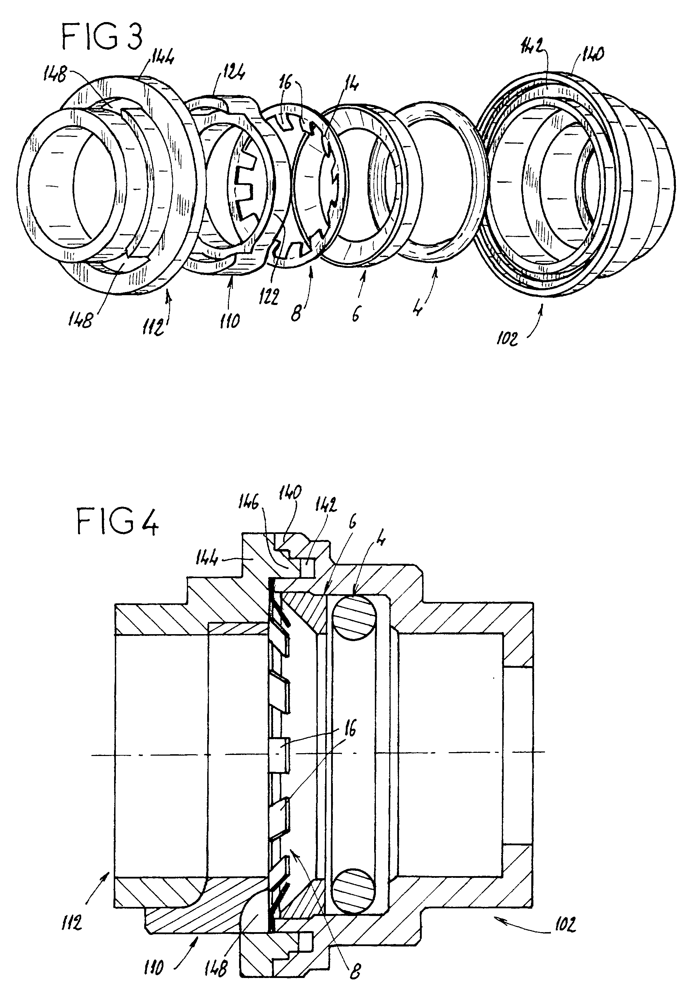

Les figures 3 et 4 montrent une variante de réalisation d'un dispositif de raccordement selon l'invention. On retrouve dans ce dispositif les mêmes joint torique 4, entretoise 6 et bague d'accrochage 8 avec sa couronne 14 et ses dents 16. On a ici un nouveau corps 102, un nouveau poussoir 110 et une nouvelle douille 112.

De même que précédemment, le corps 102 comporte un alésage étagé dans lequel prennent place le joint torique 4, l'entretoise 6 et la bague d'accrochage 8. Ce corps 102 présente une bride 140 dans laquelle est réalisée une rainure périphérique frontale 142. Cette bride 140 et cette rainure 142 sont de formes complémentaires d'une bride 144 et d'une nervure 146 réalisées sur la douille 112. Le corps 102 et la douille 112 sont emboîtés l'une dans l'autre enfermant ainsi le joint torique 4, l'entretoise 6, la bague d'accrochage 8 et le poussoir 110, au niveau de leurs brides 140 et 144 puis un soudage est réalisé au niveau de la nervure 146 et de la rainure 142 pour solidariser la douille 112 sur le corps 102.

Le poussoir 110 comporte ici aussi une partie annulaire 122. Ce poussoir 110 comporte également deux saillies 124 s'étendant radialement par rapport à la partie annulaire 122. Ici, les saillies 124 s'étendent aussi dans la direction axiale du raccord vers la douille 112. Des lumières 148 sont réalisées dans la bride 144 de la douille 112 pour recevoir les saillies 124. La longueur de ces saillies 124, dans le sens axial, est telle qu'un utilisateur puisse manuellement agir sur ces saillies 124 afin de pousser le poussoir 110 vers l'intérieur du corps 102.

Une fois un tuyau connecté dans le dispositif de raccordement représenté sur les figures 3 et 4 et décrit ci-dessus, il suffit de venir pousser dans la direction axiale sur les saillies 124 pour agir sur la partie annulaire 122 du poussoir 110 et venir écarter les dents 16 de la bague d'accrochage 8, libérant ainsi le tuyau connecté.

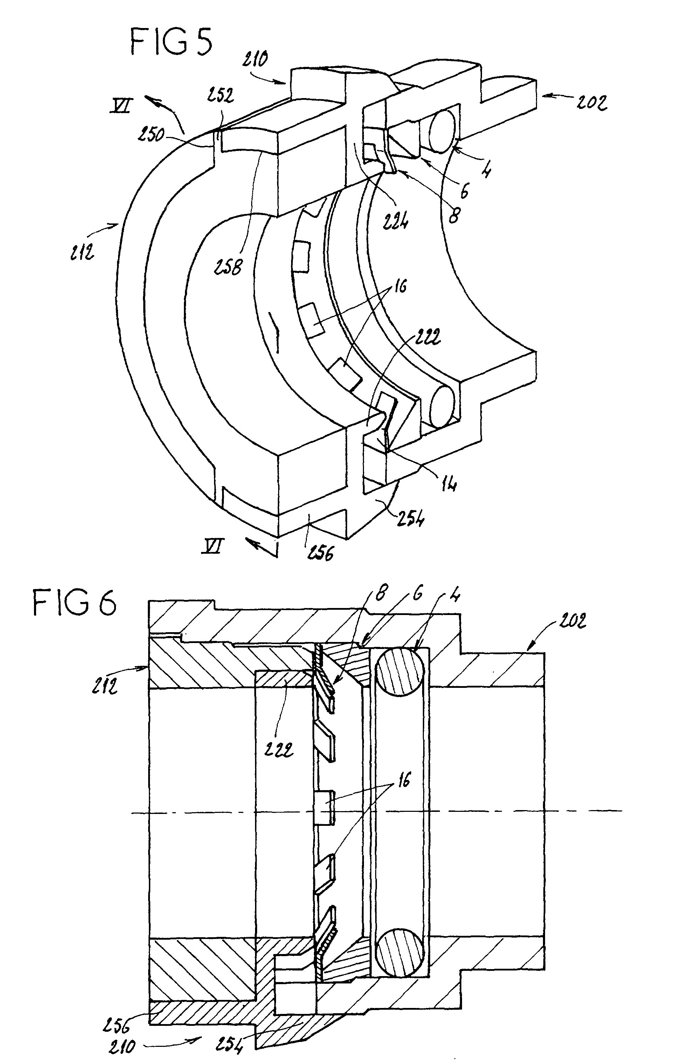

Les figures 5 et 6 montrent une troisième forme de réalisation d'un dispositif de raccordement selon l'invention.

De même que précédemment, on retrouve ici le joint torique 4, l'entretoise 6 et la bague d'accrochage 8 avec sa couronne annulaire 14 et ses dents 16. On retrouve également un corps 202, un poussoir 210 et une douille 212.

Ici, le corps 202 s'étend sur toute la longueur du dispositif de raccordement. Du côté destiné à recevoir la douille, il comporte deux encoches 250 diamétralement opposées destinées à recevoir des parties 224 en saillie du poussoir 210 ainsi qu'une partie de la douille 212.

La douille 212 comporte ici d'une part une rainure périphérique située à la périphérie de sa surface intérieure de la douille et à son extrémité orientée vers le poussoir 210 de manière à loger une partie annulaire 222 de ce poussoir. En outre, à son extrémité opposée, la douille 212 présente deux oreilles diamétralement opposées sur sa surface extérieure. Ces oreilles 252 ont une forme correspondant à la forme des encoches 250 dans lesquelles elles viennent se loger.

Pour le montage du dispositif de raccordement, on place dans le corps 202 le joint torique 4, l'entretoise 6, la bague d'accrochage 8, le poussoir 210 en venant faire glisser les parties en saillie 224 dans les encoches 250 puis la douille 212 est montée dans le corps 202 pour venir enfermer à l'intérieur de ce corps 202 tous ces éléments. La douille 212 est alors fixée sur le corps 202 par soudage. La douille 212 est dimensionnée de telle sorte qu'elle soit entièrement logée à l'intérieur du corps 202.

Comme on peut le voir sur les figures 5 et 6, le poussoir 210 présente deux parties en saillie 224 présentant chacune une section sensiblement en forme de T. Une première branche 254 du T vient en appui sur la surface extérieure du corps 202 tandis que l'autre branche 256 est logée avec guidage dans une rainure 258 de forme correspondante réalisée dans l'oreille 252 correspondante de la douille 212. On obtient ainsi un parfait guidage du poussoir 210.

Ici aussi, comme pour les deux modes de réalisation précédents, le montage d'un tube dans le dispositif de raccordement se fait de manière classique en introduisant simplement ce tube dans le dispositif de raccordement. Pour déconnecter ce tube, il suffit d'agir sur les parties en saillie hors de l'ensemble formé par le corps et la douille du dispositif de raccordement pour faire fléchir les dents 16 de la bague d'accrochage 8 et ainsi libérer le tuyau connecté.

Les trois raccords décrits ci-dessus permettent d'accéder au poussoir lorsqu'un tuyau connecté dans le dispositif de raccordement a gonflé sous l'effet de la pression du fluide qu'il conduit. Le poussoir est aussi facilement accessible lorsque l'extrémité du tube raccordé se situe juste après un virage. Le tube peut avoir été déformé de façon permanente sous l'effet de la chaleur ou pour toute autre raison. Le poussoir reste alors toujours accessible.

En outre, on peut remarquer que l'encombrement de ces trois dispositifs de raccordement peut être très réduit, la troisième forme de réalisation étant la variante la plus compacte.

Comme il va de soi, l'invention ne se limite pas aux modes de réalisation décrits ci-dessus à titre d'exemples non limitatifs ; elle en embrasse au contraire toutes les variantes de réalisation dans le cadre des revendications ci-après.

Ainsi par exemple, comme évoqué au préambule, l'invention peut aussi s'appliquer à d'autres dispositifs de raccordement démontables qui ne présentent pas de bague d'accrochage comportant des dents inclinées. Cette bague pourrait être par exemple remplacée par un ressort disposé dans un logement conique.

## Revendications

1. Dispositif de raccordement instantané démontable pour tuyau comportant un corps (2 ; 102 ; 202) dans lequel sont disposés un joint d'étanchéité (4), une entretoise (6) et un dispositif d'accrochage (8), et comportant en outre un poussoir (10 ; 110 ; 210) destiné à agir sur le dispositif d'accrochage (8) afin de permettre une déconnexion d'un tuyau raccordé,
**caractérisé en ce que** le poussoir (10 ; 110 ; 210) se présente sous la forme d'une bague annulaire (22 ; 122 ; 222) destinée à prendre place à l'intérieur du corps et présentant au moins une saillie radiale (24 ; 124 ; 224) vers l'extérieur, **en ce que** les éléments placés à l'intérieur du corps sont maintenus en position par une douille (12 ; 112 ; 212) fixée sur le corps, et **en ce que** l'ensemble formé par le corps et par la douille présente au moins une lumière correspondant à chaque fois à une saillie du poussoir.

2. Dispositif de raccordement selon la revendication 1, **caractérisé en ce que** la douille (112 ; 212) est fixée de manière irréversible sur le corps (102 ; 202).

3. Dispositif de raccordement selon la revendication 2, **caractérisé en ce que** la douille (112 ; 212) est soudée sur le corps (102 ; 202).

4. Dispositif de raccordement selon l'une des revendications 2 ou 3, **caractérisé en ce que** les lumières (148) destinées à laisser passer les saillies (124) du poussoir sont réalisées sur la douille (112).

5. Dispositif de raccordement selon la revendication 4, **caractérisé en ce que** les saillies (124) du poussoir s'étendent également dans la direction axiale et **en ce que** les lumières (148) destinées au passage des saillies sont réalisées dans une paroi (144) de la douille sensiblement radiale.

6. Dispositif de raccordement selon l'une des revendications 2 ou 3, **caractérisé en ce que** le corps (202) présente au niveau de chaque saillie (224) du poussoir une encoche (250) débouchant dans la face frontale du raccord du coté destiné à recevoir l'extrémité d'un tuyau, **en ce que** la douille (212) se présente sous la forme d'un anneau présentant des saillies radiales (252) destinées à prendre place dans les encoches (250) du corps et **en ce que** les saillies (224) du poussoir viennent prendre place avec jeu au fond des encoches (250) et y sont maintenues par les saillies radiales (224) de la douille.

7. Dispositif de raccordement selon la revendication 6, **caractérisé en ce que** les saillies radiales (224) du poussoir présentent au moins une surface de guidage venant en appui sur la douille et/ou sur le corps.

8. Dispositif de raccordement selon la revendication 1, **caractérisé en ce que** la douille (12) est encliquetée de manière réversible sur le corps (2).

9. Dispositif de raccordement selon la revendication 8, **caractérisé en ce que** le corps (2) présente des encoches axiales (18) correspondant aux saillies radiales (24) du poussoir, **en ce que** le poussoir (10) est placé dans le corps (2) de telle sorte que ses saillies radiales (24) viennent avec jeu au fond des encoches (18) du corps, **en ce que** la douille (12) est destinée à être emmanchée dans le corps et présente sur sa surface périphérique des nervures axiales (28) correspondant aux encoches (18) du corps, et **en ce que** des crochets élastiques (36, 38) sont prévus sur la douille (12) pour coopérer avec des lumières (20) réalisées dans le corps afin de permettre un encliquetage de la douille dans le corps.

## Patentansprüche

1. Demontierbare Schnellverbindungsvorrichtung für ein Rohr, mit einem Körper (2; 102; 202), in dem eine Dichtung (4), ein Distanzstück (6) und eine Einhängvorrichtung (8) angeordnet sind, und ausserdem mit einem Drücker (10; 110; 210), der dazu bestimmt ist, um auf die Einhängvorrichtung (8) einzuwirken, um ein Lösen eines angeschlossenen Rohrs zu ermöglichen, **dadurch gekennzeichnet, dass** der Drücker (10; 110; 210) in Form eines kreisförmigen Rings (22; 122; 222) vorliegt, der dazu bestimmt ist, um im Innern des Körpers zu sitzen, und mindestens einen radialen Vorsprung (24; 124; 224) nach aussen hin hat, dass die im Innern des Körpers angeordneten Elemente mittels einer an dem Körper befestigten Hülse (12; 112; 212) in ihrer Stellung gehalten werden, und dass die durch den Körper und durch die Hülse gebildete Einheit mindestens ein Schlitzloch hat, das jeweils einem Vorsprung des Drückers entspricht.

2. Verbindungsvorrichtung nach Anspruch 1, **dadurch gekennzeichnet, dass** die Hülse (112; 212) an dem Körper (102; 202) irreversibel befestigt ist.

3. Verbindungsvorrichtung nach Anspruch 2, **dadurch gekennzeichnet, dass** die Hülse (112; 212) an dem Körper (102; 202) angeschweisst ist.

4. Verbindungsvorrichtung nach einem der Ansprüche 2 oder 3, **dadurch gekennzeichnet, dass** die für den Durchtritt der Vorsprünge (124) des Drückers bestimmten Schlitzlöcher (148) an der Hülse (112) angebracht sind.

5. Verbindungsvorrichtung nach Anspruch 4, **dadurch gekennzeichnet, dass** die Vorsprünge (124) des Drückers sich auch in der axialen Richtung erstrecken und dass die für den Durchtritt der Vorsprünge bestimmten Schlitzlöcher (148) in einer im wesentlichen radialen Wand (144) der Hülse vorgesehen sind.

6. Verbindungsvorrichtung nach einem der Ansprüche 2 oder 3, **dadurch gekennzeichnet, dass** der Körper (202) bei jedem Vorsprung (224) des Drücker eine Einkerbung (250) aufweist, die in die Formfläche der Verbindung auf der zur Aufnahme eines Rohrendes bestimmten Seite mündet, dass die Hülse (212) in Form eines Ringes vorliegt, der radiale Vorsprünge (252) aufweist, die dazu bestimmt sind, um in den Einkerbungen (250) des Körpers zu sitzen, und dass die Vorsprünge (224) des Drückers mit Spiel am Boden der Einkerbungen (250) sitzen und durch die radialen Vorsprünge (224) der Hülse dort gehalten werden.

7. Verbindungsvorrichtung nach Anspruch 6, **dadurch gekennzeichnet, dass** die radialen Vorsprünge (224) des Drückers mindestens eine Führungsfläche aufweisen, die auf der Hülse und/oder auf dem Körper aufliegt.

8. Verbindungsvorrichtung nach Anspruch 1, **dadurch gekennzeichnet, dass** die Hülse (12) auf dem Körper (2) reversibel eingerastet ist.

9. Verbindungsvorrichtung nach Anspruch 8, **dadurch gekennzeichnet, dass** der Körper (2) axiale Einkerbungen (18) hat, die den radialen Vorsprüngen (24) des Drückers entsprechen, dass der Drücker (10) derart in dem Körper (2) sitzt, dass seine radialen Vorsprünge (24) am Boden der Einkerbungen (18) des Körpers mit Spiel sitzen, und dass die Hülse (12) dazu bestimmt ist, um in den Körper eingeschoben zu werden, und an ihrer Umfangsfläche axiale Rippen (28) aufweist, die den Einkerbungen (18) des Körpers entsprechen, und dass elastische Haken (36, 38) auf der Hülse (12) vorgesehen sind, um mit den in dem Körper vorhandenen Schlitzlöchern (20) zusammenzuwirken, um ein Einrasten der Hülse in dem Körper zu ermöglichen.

## Claims

1. Dismantlable instant-action connecting device for a pipe, said device having a body (2; 102; 202) in which a seal (4), a distance-piece (6) and a hooking-on device (8) are disposed, and also having a trigger (10; 110; 210) which is intended to act upon the hooking-on device (8) in order to permit disconnection of a pipe which has been connected,
**characterised in that** the trigger (10; 110; 210) is in the form of an annular ring (22; 122; 222) which is intended to take up position inside the body and has at least one radial projection (24; 124; 224) towards the outside; **in that** the elements placed inside the body are held in position by a sleeve (12; 112; 212) which is fixed onto the body; and **in that** the assembly formed by the body and by the sleeve has at least one aperture corresponding, in each case, to a projection on the trigger.

2. Connecting device according to claim 1, **characterised in that** the sleeve (112; 212) is fixed onto the body (102; 202) in a non-reversible manner.

3. Connecting device according to claim 2, **characterised in that** the sleeve (112; 212) is fused onto the body (102; 202).

4. Connecting device according to one of claims 2 or 3, **characterised in that** the apertures (148) intended to permit the passage of the projections (124) on the trigger are produced on the sleeve (112).

5. Connecting device according to claim 4, **characterised in that** the projections (124) on the trigger also extend in the axial direction; and **in that** the apertures (148) intended for the passage of the projections are produced in a substantially radial wall (144) of the sleeve.

6. Connecting device according to one of claims 2 or 3, **characterised in that** the body (202) has, at the level of each projection (224) on the trigger, a slot (250) which opens into the front face of the connection on the side which is intended to receive the end of a pipe; **in that** the sleeve (212) is in the form of a collar having radial projections (252) which are intended to take up position in the slots (250) in the body; and **in that** the projections (224) on the trigger take up position, with clearance, at the bottom of the slots (250) and are held there by the radial projections (224) on the sleeve.

7. Connecting device according to claim 6, **characterised in that** the radial projections (224) on the trigger have at least one guide surface which bears on the sleeve and/or on the body.

8. Connecting device according to claim 1, **characterised in that** the sleeve (12) is latched onto the body (2) in a reversible manner.

9. Connecting device according to claim 8, **characterised in that** the body (2) has axial slots (18) which correspond to the radial projections (24) on the trigger; **in that** the trigger (10) is placed in the body (2) in such a way that its radial projections (24) reach the bottom of the slots (18) in the body with clearance; **in that** the sleeve (12) is intended to be fitted into the body and has, on its peripheral surface, axial ribs (28) which correspond to the slots (18) in the body; and **in that** elastic hooks (36, 38) are provided on the sleeve (12) for the purpose of cooperating with apertures (20) produced in the body so as to permit latching of the sleeve into the body.
